Europäisches Patentamt

European Patent Office

Office européen des brevets

(11) Publication number: **0 161 557**
**B1**

(12) EUROPEAN PATENT SPECIFICATION

(45) Date of publication of patent specification: **12.07.89**

(21) Application number: **85105041.9**

(22) Date of filing: **25.04.85**

(51) Int. Cl.⁴: **F 16 L 5/02**

(54) Method of filling in sleeve hole for piping and repairing structure therefor.

(30) Priority: **04.05.84 JP 88369/84**
**05.05.84 JP 65622/84**

(43) Date of publication of application:
**21.11.85 Bulletin 85/47**

(45) Publication of the grant of the patent:
**12.07.89 Bulletin 89/28**

(84) Designated Contracting States:
**DE FR GB**

(56) References cited:
**DE-B-1 249 023**
**DE-U-1 881 343**
**DE-U-7 133 288**
**US-A-4 383 692**

(73) Proprietor: **Shibayama Kogyo Kabushiki Kaisha**
**1159, Hishida Shibayamacho**
**Sanbu-gun Chiba (JP)**

(72) Inventor: **Miyano, Kaoru**
**1159, Hishida Shibayamacho**
**Sanbu-gun Chiba (JP)**
Inventor: **Kimura, Masataka**
**81-41, Tatsusawa-Shinden Tomisato**
**Inba-gun Chiba (JP)**

(74) Representative: **Boeters, Hans Dietrich, Dr. et al**
**Boeters, Bauer & Partner Thomas-Wimmer-Ring 14**
**D-8000 München 22 (DE)**

## Description

The invention relates to a method of filling in a sleeve hole for a piping and a plate structure therefore in accordance with the preambles of the Claims 1 and 3, respectively.

E.g. multifloor buildings nowadays are constructed economically using structural calculation by a computer in view of fire-proof, earthquake-proof and similar capabilities. In contrast thereto the stopping, i.e. filling in of sleeve holes for pipings in the building as they are used for plumbing work, sanitary work, gas, hot water and electrical installations, ventilation, air-conditioning and the like is still carried out using an uneconomic antiquated technique. In addition to being troublesome and time-consuming, the stopping of the sleeve hole thus obtained is incomplete resulting in not only the leakage of water, gas and/or noise to the upper and lower floors or adjacent rooms, respectively, but, in certain cases, even in the propagation of poisoning and/or inflamable gases due to gas leakage, the spread of a fire and the like.

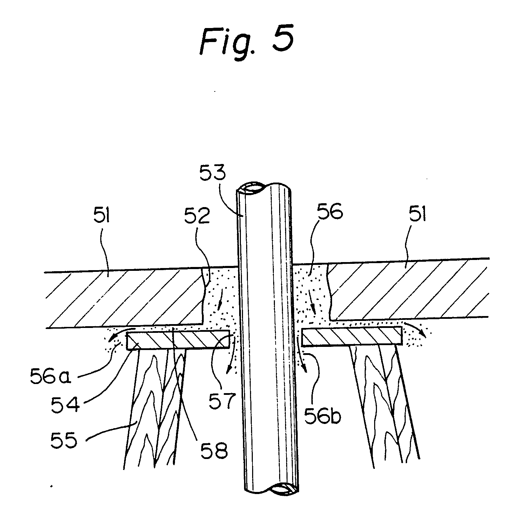

Conventionally the filling in of a sleeve hole is carried out in the following manner: A plate of e.g. plywood is applied to the lower surface of a member such as a ceiling slab provided with the sleeve hole to close the hole, this plate being upwardly supported by a strutting such as a rafter. Thereupon mortar is poured into the sleeve hole through the open upper end thereof. Such a conventional method will in the following be described in more detail with reference to Figure 5:

In Figure 5 reference numeral 51 designates a ceiling slab having a vertical sleeve hole 52 formed therethrough and 53 designates a piping for tap water or the like inserted in said sleeve hole 52. The sleeve hole 52 is filled in according to the following manner:

First, an annular plate member 54 cut from plywood and provided with a central bore and a cutting line extending from the bore to the periphery of the plate member is fitted on the piping 53 by introducing the latter through the cutting line. Then a supporting structure in the form of a strutting 55 is upwardly abutted against the lower surface of the plate member 54 to rigidly support the plate member thereon. Thereafter mortar 56 is poured into the sleeve hole 52 from the open upper end thereof and allowed to solidify. Finally, the structure including the members 54 and 55 is removed.

Such conventional method has the disadvantage of being highly troublesome and still failing to bring about a satisfactory stopping. More particularly, since the bore of the plate member 54 must normally be made by sawing, it is highly difficult to form this bore thus that it conforms to the piping 53. This results in a gap 57 existing between the piping 53 and the periphery of the bore. Also, this formation of the annular plate member 54 requires much time and labor and, though the plate member 54 is pressed against the slab 51 by the strutting 55, it may not intimately contact the slab due to lacking yieldiness and flexibility. Further, the plate member 54 must be removed after solidification of the mortar in view of fire prevention provisions. Moreover, in the conventional method, when mortar 56 is poured into the sleeve hole 52, a part of the mortar or at least of the water contained therein may leak through gaps 58 existing between the slab 51 and the plate member 54 as well as the gap 57 between the plate member 54 and the piping 53, as is indicated at 56a and 56b. In order to avoid this trouble the use of rather hard mortar is required which does not tend to leak. However, such hard mortar fails to uniformly distribute and solidify and thus forms a concrete having deficiencies such as a large number of small voids or cavities which cause leakage of water, gas, noise, and the like from the adjoining floors or rooms.

Thus the conventional method requires much time and labor yet without bringing about a satisfactory result.

Accordingly, it is the object of the present invention to provide a method of filling in a sleeve hole for a piping which is more effective, which can be practiced in a simpler manner, i.e. less time-consuming and without any troublesome operation and skill, and which results in an improved appearance.

This problem is solved by making use of the characterizing features of Claim 1.

The plate structure as claimed in Claim 3 aims to still improve and facilitate the method of Claim 1.

The dependent claims refer to additional improvements or preferred embodiments.

Generally speaking, in accordance with the claimed invention a sleeve hole for a piping is filled in in the following manner:

A plate member is provided from a bendable sheet or sheet structure, this plate member having a coating of a water sealing adhesive material on one surface thereof and an insertion hole at substantially the central portion thereof. The piping is inserted into the insertion hole. Then the plate member surrounding the piping is adhered to the slab provided with the respective sleeve hole to close and seal one end thereof. Then mortar is poured into the sleeve hole from the open end thereof and allowed to solidify.

For a fuller understanding of the invention, reference is had to the following description taken in connection with the accompanying drawings, in which:

Figure 1 is a vertical sectional view showing a manner of practicing a method of filling in a sleeve hole for a piping according to the present invention;

Figure 2 is a perspective view of a plate structure used in the method of Figure 1;

Figure 3 is a perspective view showing another embodiment of such plate structure in an original state;

Figure 4 is a further embodiment of such plate structure in its original state; and

Figure 5 (as mentioned before) is a vertical sectional view showing a manner of practicing a conventional method of filling in a sleeve hole for a piping.

Now, a method of filling in a sleeve hole for a piping and a repairing structure therefor according to the present invention will be described hereinafter with reference to the accompanying drawings.

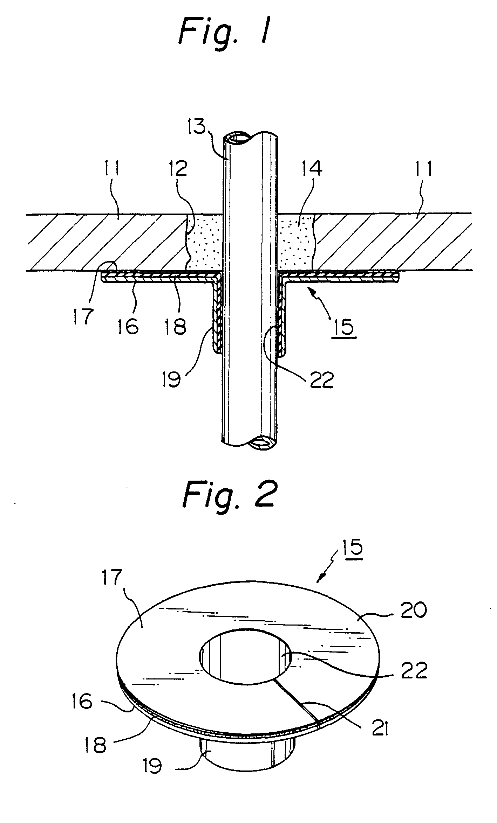

Figure 1 is a vertical sectional view showing a manner of practicing a method of filling in a sleeve hole for a piping according to the present invention and an embodiment of a plate structure used therein wherein reference numeral 11 designates a ceiling slab. The slab 11 is formed with a sleeve hole 12 therethrough through which a piping 13 for gas, tap water, electric wiring or the like is conducted. The piping 13 is provided to vertically extend through the respective floors of a building. The sleeve hole 12 is filled with mortar 14 to be closed. Reference numeral 15 designates the plate structure which is arranged to close the bottom portion of the sleeve hole 12. The plate structure 15 has a water-resistant (i.e. water sealing and not peeling off by water), pressure-sensitive, heavy-duty adhesive layer 17 formed on the overall surface thereof contacting with the slab 11 and piping 13 and is bonded through the adhesive layer 17 to the lower surface of the slab and the peripheral surface of the piping 13. In the illustrated embodiment, the adhesive layer 17 is formed on a bendable substrate comprising an aluminum sheet 16 and a sheet of butyl rubber 18 laminated together. The plate structure 15 has a leg portion 19 of a cylindrical shape which is adhered to the piping 13. The term "sheet" used in relation to a metal sheet herein includes both a sheet and a foil.

Figure 2 is a perspective view of the plate structure 15 shown in Figure 1, wherein reference numeral 20 indicates a flange portion of the plate structure 15 which is adapted to be bonded onto the lower surface of the slab 11. Reference numeral 21 designates a cutting line formed along the overall length of the plate structure 15 or so as to axially extend from the lower end of the leg portion 19 to the inner end of the flange portion 20 and then radially extend from the inner periphery of the flange portion 20 and, further to the outer periphery thereof. 22 designates a hole defined in the interior of the cylindrical leg portion 19. The hole 22 has a diameter essentially equal to or slightly larger than the outer diameter of the piping 13. In the illustrated embodiment the hole 22 is formed to have the same diameter throughout. However, it may be formed into a frusto-conical shape in section. The adhesive layer 17 of the plate structure 15 is previously covered with a releasable protective paper sheet (not shown), which is removed therefrom when the material 15 is used. The leg portion 19 may optionally be shortened.

Any material may be used for the substrate of the plate structure 15 so far as it is bendable. The word "bendable" material used herein means a material having flexibility or softness sufficient to allow the material to be uniformly intimately contacted with the surface of the slab 11 in a manner to conform to roughness of the surface when the plate structure 15 is adhered to the slab 11. The substrate may be formed from a composite material consisting of a sheet of metal, such as aluminum, copper or the like, and another sheet of a butyl rubber, paper, fabric, plastic or the like. Alternatively, the substrate may be formed of a single sheet material. For example, it may be formed of only a butyl rubber sheet without using an aluminum sheet. However, in order to improve the fire proof properties of the plate structure 15, it is preferable to laminate the rubber sheet on a sheet of metal such as aluminum, copper or the like or on e.g. an asbestos sheet, which may also be singly used.

The pressure-sensitive adhesive layer 17 of the plate structure 15 may be formed according to any suitable technique conventionally known in the art. For example, the layer 17 may be directly applied to the substrate. Alternatively, it may be formed by applying onto the substrate a double-coated tape having a pressure-sensitive adhesive layer formed thereon.

As an adhesive for the pressure-sensitive adhesive layer, any conventional pressure-sensitive adhesive may be used so far as it can adhere to concrete and the like. The term "water-resistant" used in relation to the water-resistant pressure-sensitive heavy-duty adhesive layer means that the plate structure adhered to concrete or the like is not peeled by water contained in the mortar. Such adhesives include, for example, rubber adhesives such as nitrile rubber adhesive, chloroprene rubber adhesive and the like; vinyl adhesives such as a vinyl acetate adhesive and the like; acrylic adhesives; and the like.

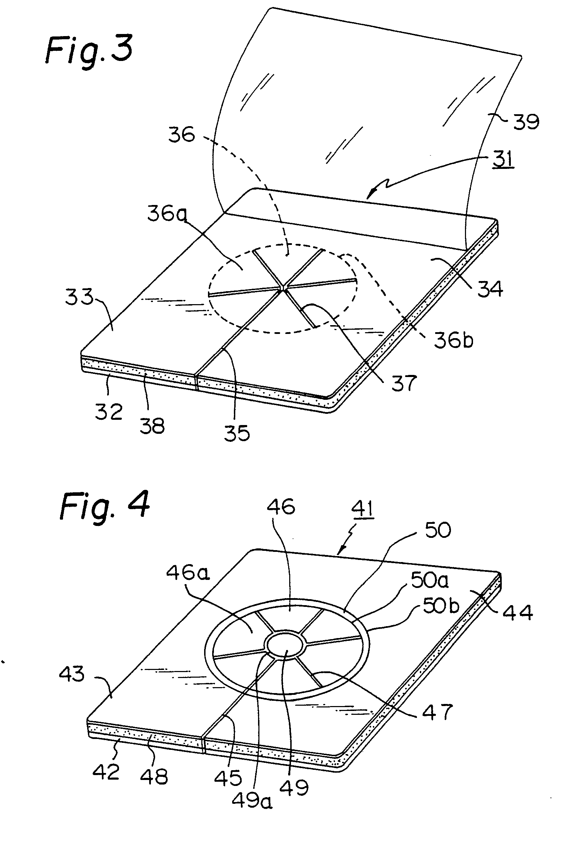

Figure 3 is a pespective view showing another embodiment of a plate structure according to the present invention. In this embodiment, the portion corresponding to leg portion 19 in Figure 1 is formed by folding down the centre portion of the plate structure. The plate structure of Figure 3, which is generally designated by reference numeral 31, comprises a bendable substrate formed of an aluminum sheet 32 and a butyl rubber sheet 38 laminated together and a waterproof, pressure-sensitive adhesive layer 33 deposited on top of the butyl rubber sheet 38. Reference numeral 39 designates a releasable protective paper sheet covering the pressure-sensitive adhesive layer 33, which paper sheet is removed immediately before the plate structure is used. The substrate is formed with a plurality of cutting lines 37 radially extending from the center of the substrate by a suitable distance to separate the central portion of the substrate into a plurality of fan-shaped segments 36a which are adapted to be bent downward to provide portions 36 adhering to the piping. In the illustrated embodiment, the cutting lines 37 extend by a distance substantially equal to the radius of the piping. Aside from the piping adhering portions 36 the plate structure 31 comprises a flange portion 34. One of the radial cutting lines 37 is replaced by a long cutting line 35 extending to the periphery of the substrate.

The manner of use of the plate structure 31 thus described will hereinafter be described.

First the fan-shaped segments 36a of the plate structure 31 are bent downward to form a circular hole 36b whereupon the plate structure 31 is expanded along the cutting line 35. Then the piping (not shown) extending through a sleeve hole of a slab (not shown) is inserted into the circular hole 36b. Thereafter, the flange portion 34 is pushed against the lower surface of the slab to be adhered thereto and the segments 36a are adhered to the outer periphery of the piping, so that the bottom of the sleeve hole of the slab is sealedly closed. Then, mortar is poured into the sleeve hole in a manner as shown in Figure 1. The diameter of the circular hole 36b is preferably essentially equal to or originally slightly smaller than the outer diameter of the piping.

Figure 4 is a perspective view showing a further embodiment of a plate structure according to the present invention, this plate structure being generally designated by reference numeral 41. The plate structure 41 is formed at the central region thereof with a blanked portion 49 and has a circular colored strip 50 of a width within a range from about 4 mm to about 10 mm printed on one surface along the periphery of the later insertion hole through which the piping (not shown) is to be inserted. In practice, the blanked portion 49 is pushed out by a finger and removed from the plate structure 41 to form an identification hole which serves to facilitate the positioning of the piping at the center of the insertion hole. The annular colored strip 50 preferably has pressed inner and outer peripheral edges 50a and 50b, respectively. The pressed edges, particularly, edge 50a facilitate the operation of opening the insertion hole by bending the segments 46a obtained in the manner as described in the embodiment of Figure 3) to form bent down portions 46.

The remaining part of the plate structure 41 shown in Figure 4 is constructed in substantially the same manner as shown in Figure 3. More particularly, the plate structure 41 is made from a bendable substrate formed of an aluminum sheet of foil 42 and a butyl rubber sheet 48 laminated together and a pressure-sensitive adhesive layer 43 formed on top of the butyl rubber sheet 48. The plate structure 41 is formed with a plurality of cutting lines 47 radially extending from the central blanked portion 49 to the annular colored strip 50 and comprises a piping adhesion, portion comprising a plurality of downwardly extending portions obtained by bending the respective fan-shaped segments 46a, and a flange portion 44 surrounding the piping adhesion portion. One of the cutting lines 47 again is replaced by a long one, 45, extending to the periphery of the substrate. Reference numeral 49a designates an annular cutting line for the blanked portion 49. The pressure-sensitive adhesive layer 43 is covered with a releasable protective paper (not shown).

The plate structure 41 of Figure 4 is used substantially in the same manner as that one of Figure 3.

Each of the plate structures of the illustrated embodiments described above may be modified in a manner such that the releasable protective sheet is formed to be separated into two sections about the center thereof. This facilitates the operation of adhering the plate structure to the slab because it is possible to remove the protective sheet in two steps. Thus, the plate structure can be precisely positioned even at a limited place such as a corner of a room.

In the embodiment shown in Figure 4, the annular colored strip 50 may be constructed to have an inner diameter corresponding to the outer diameter of a piping of the largest thickness such as an asbestos pipe. This allows a piping to be smoothly inserted through the insertion hole of the plate structure, irrespective of the outer diameter thereof.

Further, in each of the embodiments, the diameters of the piping insertion hole and piping adhesion portion may be adjusted in response to the diameter of the piping used. Also, the flange portion of the plate structure may be formed into any suitable shape such as rectangular, circular or the like.

Furthermore, the plate structure as a whole may be formed to have any suitable configuration such as that of a circle, rectangle, polygon or the like.

As can be seen from the foregoing, the method of the present invention allows to effectively carry out the solidification of mortar while preventing the leakage of mortar from the bottom of the sleeve hole of the slab and maintaining the quality of mortar at a satisfactory level.

Also, the plate structure of the present invention has satisfactory bendability sufficient to be intimately bonded to the lower surface of the respective slab or the like to effectively prevent the leakage of water, so that mortar poured into the sleeve hole may be uniformly solidified into concrete. Plywood used in the conventional method is under an obligation to be removed after the execution from the point of view of fire prevention, however, the use of aluminum, asbestos or the like for the substrate of the plate structure in the present invention eliminates the removing operation to simplify the process. It can, however easily be peeled off if this is desired. Further, the radially extending cutting lines of the embodiments shown in the Figures 3 and 4) significantly facilitate, the application and bonding of the respective plate structures to the piping.

Thus the present invention permits to perfectly stop a sleeve hole provided in a slab for a piping to effectively prevent the leakage of gas or water from upper or lower floors or adjoining rooms, the spreading of a fire and the leakage of noise through the sleeve hole.

The present invention has been described in connection with a vertical sleeve hole, however, it is applicable also to a hole of a side wall.

## Claims

1. A method of filling in a sleeve hole (12) for a piping (13), the method comprising the steps of providing a water-tight plate structure (15; 31; 41) having an insertion hole (22) at substantially the central portion thereof suitable to receive said piping, inserting said piping (13) into said hole (22), attaching said plate structure (15; 31; 41) to one surface of a portion (11) provided with said sleeve hole (12) to there close said sleeve hole, pouring mortar (14) into said closed sleeve hole (12) and allowing said mortar to solidify, characterized in that said plate structure (15; 31; 41) is adhered to said surface by means of a layer of water-resistant adhesive material (17) having water-sealing properties.

2. The method of Claim 1, wherein said plate structure (15; 31; 41) is additionally adhered to said piping (13).

3. A plate structure (15; 31; 41) for being used in the method of Claim 1 or 2, said plate structure having an insertion hole (22) at substantially the central portion thereof and being characterized in that it consists of a bendable sheet structure (16, 18; 32, 38; 42, 48) coated on one surface thereof with a layer of water-resistant adhesive material (17; 33; 43) having water-sealing properties.

4. The plate structure of Claim 3, wherein said adhesive material (17; 33; 43) is pressure-sensitive, i.e. yielding to pressure.

5. The plate structure of Claim 3 or 4, wherein said insertion hole (22) is provided in a substantially cylindrical leg portion (19) of said plate structure (15; 31; 41).

6. The plate structure of Claim 5, wherein said leg portion (19) is formed by a plurality of fan-shaped segments (36a; 46a) obtained by separating the central region of said plate structure (15; 31; 41) by means of a plurality of cutting lines (35; 37; 45, 47) extending radially from the center of said plate structure to a radius substantially equal to the radius of said piping (13).

7. The plate structure of Claim 6, wherein the tips of said fan-shaped segments (46a) are cut off such as obtained by providing a blanked center portion (49) prior to the bending of said segments.

8. The plate structure of Claim 6 or 7, wherein also the inner surface of said leg portion (19) is coated with adhesive material (17; 33; 43).

9. The plate structure of anyone of the Claims 3 to 8, wherein a cut (21; 35; 45) extends from said insertion hole (22) to the periphery of said plate structure (15; 31; 41).

10. The plate structure of anyone of the Claims 3 to 9, wherein said bendable sheet structure is a compound structure of a metal sheet (16; 32; 42) and a sheet having rubber proprties (18; 38; 48), the latter being laminated onto said metal sheet, and wherein said adhesive material (17; 33; 43) is applied onto said sheet having rubber properties (18; 38; 48).

11. The plate structure of Claim 10, wherein said metal sheet (16; 32; 42) is an aluminum sheet.

12. The plate structure of anyone of the Claims 3 to 11, wherein said adhesive material (17; 33; 43) is applied to said bendable sheet structure (16, 18; 32, 38; 42, 48) either directly or in the form of a double-coated adhesive tape.

13. The plate structure of anyone of the Claims 3 to 12, wherein a protective sheet (39) of e.g. paper is releasably applied onto said layer of adhesive material (17; 33; 43).

14. The plate structure of Claim 13, wherein said protective sheet (39) is formed to be separated into two sections about the center thereof.

## Patentansprüche

1. Verfahren zum Ausfüllen eines Buchsenloches (12) für eine Rohrleitung (13), mit den Verfahrensschritten Bereitstellen einer wasserdichten Plattenstruktur (15; 31; 41) mit einem Einführungsloch (22) in im wesentlichen ihrem zentralen Bereich, das geeignet ist, die Rohrleitung aufzunehmen, Einsetzen der Rohrleitung (13) in das genannte Loch (22), Anbringen der genannten Plattenstruktur (15; 31; 41) an einer Oberfläche eines mit dem Buchsenloch (12) versehenen Teils (11), um dort das Buchsenloch zu verschließen, Eingießen von Mörtel (14) in das so verschlossene Buchsenloch (12) und Erstarrenlassen des Mörtels, dadurch gekennzeichnet, daß die genannte Plattenstruktur (15; 31; 41) an der genannten Oberfläche mittels einer Schicht wasserfesten Klebematerials (17) mit wasserdichtenden Eigenschaften zum Anhaften gebracht wird.

2. Verfahren nach Anspruch 1, worin die genannte Plattenstruktur (15; 31; 41) zusätzlich an der Rohrleitung (13) zum Anhaften gebracht wird.

3. Plattenstruktur (15; 31; 41) zur Verwendung bei dem Verfahren nach Anspruch 1 oder 2, wobei diese Plattenstruktur ein Einführungsloch (22) in im wesentlichen ihrem zentralen Bereich aufweist und dadurch gekennzeichnet ist, daß sie aus einer beigsamen Scheibenstruktur (16, 18; 32, 38; 42, 48) besteht, die an einer ihrer Oberflächen mit einer Schicht eines wasserfesten Klebematerials (17; 33; 43) mit wasserdichtenden Eigenschaften überzogen ist.

4. Plattenstruktur nach Anspruch 3, worin das genannte Klebematerial (17; 33; 43) druckempfindlich, d.h. gegenüber Druck nachgiebig, ist.

5. Plattenstruktur nach Anspruch 3 oder 4, worin das Einführungsloch (22) in einem im wesentlichen zylindrischen Schaftabschnitt (19) der genannten Plattenstruktur (15; 31; 41) vorgesehen ist.

6. Plattenstruktur nach Anspruch 5, worin der Schaftabschnitt (19) von einer Mehrzahl fächerförmiger Segmente (36a; 46a) gebildet wird, die durch Auftrennen des zentralen Bereiches der Plattenstruktur (15; 31; 41) mittels einer Mehrzahl Schnittlinien (35, 37; 45, 47) erhalten wurden, welche sich radial vom Zentrum der genannten Plattenstruktur bis zu einem Radius erstrecken, der im wesentlichen gleich dem Radius der Rohrleitung (13) ist.

7. Plattenstruktur nach Anspruch 6, worin die Enden der fächerförmigen Segmente (46a) vor dem Biegen dieser Segmente derart abgeschnitten sind, wie es durch Ausstanzen des Mittelbereichs (49) erreicht wird.

8. Plattenstruktur nach Anspruch 6 oder 7, worin auch die Innenfläche des genannten Schaftabschnitts (19) mit Klebematerial (17; 33; 43) überzogen ist.

9. Plattenstruktur nach einem der Ansprüche 3 bis 8, worin ein Schnitt (21; 35; 45) sich von dem genannten Einführungsloch (22) zur Peripherie der betreffenden Plattenstruktur (15; 31; 41) erstreckt.

10. Plattenstruktur nach einem der Ansprüche 3 bis 9, worin die beigsame Scheibenstruktur eine zusammengesetzte Struktur eines Metallblechs (16; 32; 42) und einer Scheibe mit Gummieigenschaften (18; 38; 48) ist und die letztere auf das Metallblech auflaminiert ist und worin das Klebematerial (17; 33; 43) auf die Scheibe mit Gummieigenschaften (18; 38; 48) aufgebracht ist.

11. Plattenstruktur nach Anspruch 10, worin das Metallblech (16; 32; 42) ein Aluminiumblech ist.

12. Plattenstruktur nach einem der Ansprüche 3 bis 11, worin das genannte Klebematerial (17; 33; 43) auf die biegsame Schiebenstruktur (16, 18; 32, 38; 42, 48) entweder unmittelbar oder in Form eines doppelseitig beschichteten Klebebandes aufgebracht ist.

13. Plattenstruktur nach einem der Ansprüche 3 bis 12, worin eine schützende Lage (39) aus beispielsweise Papier lösbar auf die Schicht des Klebematerials (17; 33; 43) aufgebracht ist.

14. Plattenstruktur nach Anspruch 13, worin die schützende Lage (39) entsprechend ausgebildet ist, um in zwei Abschnitte um ihr Zentrum getrennt zu werden.

**Revendications**

1. Procédé pour remplir un trou (12) de passage de tuyauterie (13), ce procédé comportant les étapes de constitution d'une structure en plaque étanche à l'eau (15, 31, 41) ayant un passage d'introduction (22) situé sensiblement dans sa partie centrale et convenant pour recevoir ladite tuyauterie, d'introduction de ladite tuyauterie (13) dans ledit passage (22), de fixation de ladite structure en plaque (15, 31, 41) sur une surface d'un élément (11) muni dudit trou de passage (12) pour y fermer ledit trou de passage, de coulage de mortier (14) dans ledit trou de passage fermé (12) et de solidification libre dudit mortier, caractérisé en ce que ladite structure en plaque (15, 31, 41) est collée sur ladite surface au moyen d'une couche de matériau adhésif (17) résistant à l'eau et ayant des propriétés d'étanchéité à l'eau.

2. Procédé selon la revendication 1, dans lequel ladite structure en plaque (15, 31, 41) est, de plus, collée sur ladite tuyauterie (13).

3. Structure en plaque (15, 31, 41) destinée à être utlisée dans le procédé suivant la revendication 1 ou 2, ladite structure en plaque présentant un passage d'introduction (22) situé sensiblement dans sa partie centrale et étant caractérisé en ce qu'elle est constituée d'une structure en feuille souple (16, 18; 32, 38; 42, 48) revêtue sur une face d'une couche de matériau adhésif (17, 33, 43) résistant à l'eau et ayant des propriétés d'étanchéité à l'eau.

4. Structure en plaque selon la revendication 3, dans laquelle ledit matériau adhésif (17, 33, 43) est sensible à la pression, c'est-à-dire qu'il cède à la pression.

5. Structure en plaque selon la revendication 3 ou 4, dans laquelle ledit passage d'introduction (22) est constitué dans une partie de pied sensiblement cylindrique (19) de ladite structure en plaque (15, 31, 41).

6. Structure en plaque selon la revendication 5, dans laquelle ladite partie de pied (19) est constituée de plusieurs secteurs (36a, 46a) en forme d'éventail obtenus en divisant la zone centrale de ladite structure en plaque (15, 31, 41) au moyen de plusieurs lignes de coupe (35, 37; 45, 47) s'étendant en direction radiale à partir du centre de ladite structure en plaque à un rayon sensiblement égal au rayon de ladite tuyauterie (13).

7. Structure en plaque selon la revendication 6, dans laquelle les extrémités desdits secteurs (46a) en forme d'éventail sont coupées, comme cela est obenu en formant une partie centrale poinçonnée (49) avant le pliage desdits secteurs.

8. Structure en plaque selon la revendication 6 ou 7, dans laquelle la surface intérieure de ladite partie de pied (19) est également revêtue de matériau adhésif (17, 33, 43).

9. Structure en plaque selon l'une quelconque des revendications 3 à 8, dans laquelle une ligne de coupe (21, 35, 45) s'étend depuis le passage d'introduction (22) jusqu'à la périphérie de ladite structure en plaque (15; 31; 41).

10. Structure en plaque selon l'une quelconque des revendications 3 à 9, dans laquelle ladite structure en feuille souple est une structure composite formée d'une feuille de métal (16, 32, 42) et d'une feuille ayant les propriétés du caoutchouc (18, 38, 48), cette dernière formant sur ladite feuille de métal un ensemble stratifié conjointement avec elle, et dans laquelle ledit matériau adhésif (17, 33, 43) est appliqué sur ladite feuille ayant les propriétés du caoutchouc (18, 38, 48).

11. Structure en plaque selon la revendication 10, dans laquelle ladite feuille de métal (16, 32, 42) est une feuille d'aluminium.

12. Structure en plaque selon l'une quelconque des revendications 3 à 11, dans laquelle ledit matériau adhésif (17, 33, 43) est appliqué sur ladite structure en feuille souple (16, 18; 32, 38; 42, 48) directement ou sous forme d'un ruban adhésif revêtu sur ses deux faces.

13. Structure en plaque selon l'une quelconque des revendications 3 à 12, dans laquelle une feuille protectrice (39), par exemple en papier, est appliquée de façon amovible sur ladite couche de matériau adhésif (17; 33; 43).

14. Structure en plaque selon la revendication 13, dans laquelle ladite feuille protectrice (39) est constituée pour être divisée en deux éléments autour de son centre.

## Fig. 1

## Fig. 2

*Fig.3*

*Fig. 4*

# Fig. 5